# EUROPEAN PATENT APPLICATION

(11) **EP 4 745 435 A1**
(43) Date of publication of application: **20.05.2026**
(21) Application number: 24839987.5
(22) Date of filing: 03.07.2024
(51) Int. Cl.: F16H 61/438, F16H 61/423, A01B 33/08, A01B 69/00

(54) **AGRICULTURAL WORK VEHICLE AND CONTROL METHOD THEREFOR**

(30) Priority: 13.07.2023 KR 20230091096
(71) Applicant: LS Mtron Ltd., Anyang-si, Gyeonggi-do 14119 (KR)
(72) Inventor: SHIN, Ok Shik, Anyang-si Gyeonggi-do 14119 (KR); CHEONG, Seung Ho, Anyang-si Gyeonggi-do 14119 (KR)
(74) Representative: K&L Gates LLP
(86) International application number: PCT/KR2024/009424
(87) International publication number: WO 2025/014174

(57) **Abstract**

The present invention is directed to an agricultural work vehicle and a method of controlling the same. According to the present invention, a set vehicle speed may be varied while maintaining a constant-speed driving mode, and the control of the hydrostatic transmission is performed to maintain the set vehicle speed, thereby improving the convenience of use and utilization rate of an agricultural work vehicle.

## Description

### Technical Field

The present invention relates particularly to the constant-speed driving function of an agricultural work vehicle to which a hydrostatic transmission is applied.

### Background Art

Hydrostatic transmissions are transmission means that are primarily installed in agricultural work vehicles (agricultural tractors, combine harvesters, rice transplanters, etc.) that require frequent gear shifting due to their driving characteristics.

A hydrostatic transmission operates in a continuously variable manner, and includes a hydraulic motor, a hydraulic pump, and the like.

The hydraulic motor generates rotational force on an output shaft through hydraulic pressure based on the flow rate of working fluid from the hydraulic pump.

The hydraulic pump is operated by the rotational force output from an engine, and draws in working fluid and provides it to the hydraulic motor. That is, the hydraulic pump provides hydraulic pressure to the hydraulic motor, and the hydraulic motor is rotated by the hydraulic pressure from the hydraulic pump.

The hydraulic pump is equipped with a swash plate for gear shifting, and gear shifting is achieved by the rotation of the swash plate. In other words, the vehicle speed of an agricultural work vehicle is determined by the rotational angle of the swash plate. Furthermore, forward and reverse gear shifting may be achieved depending on the rotational direction of the swash plate in a neutral position.

According to the hydrostatic transmission, the flow rate provided to the hydraulic motor is varied depending on the rotational angle of the swash plate, and thus continuously variable acceleration and deceleration are achieved. In other words, the hydrostatic transmission is provided as a variable-capacity type that performs gear shifting through the variation of the flow rate provided to the hydraulic motor. The degree of capacity variation is determined by the direction and amount of rotation of the swash plate.

Generally, agricultural work vehicles are used primarily for cultivation. Accordingly, constant-speed driving in which driving speed is constant is frequently required for the appropriateness of work.

Conventional agricultural work vehicles have a structure that mechanically fixes a foot pedal for acceleration and deceleration at a fixed position. Accordingly, an implementation is made such that as the position of the foot pedal is fixed, the position (rotational angle) of a swash plate is also fixed, so that the agricultural work vehicles are driven at a constant speed.

Alternatively, agricultural work vehicles equipped with electronically controlled hydrostatic transmissions are equipped with a constant-speed driving switch. In this case, a driver may manipulate a foot pedal to achieve a desired speed and then activate a constant-speed driving control function via the constant-speed driving switch. The controller then controls a hydrostatic transmission in a constant-speed driving mode based on the speed corresponding to the current amount the foot pedal is pressed. The present invention relates particularly to a case where a constant-speed driving switch is provided.

However, even when agricultural work vehicles operate in a constant-speed mode, constant-speed driving may sometimes become difficult due to fluctuations in the load (hereinafter referred to as the "driving load") on wheels caused by uneven ground conditions.

Meanwhile, vehicle speed may fluctuate due to the unevenness (hardness, and the like) of the work target soil. For example, the rotational force of a rotary, which is one of the implements for agricultural work vehicles, is supplied by a structure in which a portion of the power output from a hydrostatic transmission is extracted. In the work using a rotary, a constant rotational speed needs to be maintained to achieve the same work result over the same distance traveled. In this case, the unevenness of the soil may cause uneven workload. This load is then applied to the output shaft of the hydrostatic transmission, so that the work load affects the vehicle speed, and the phenomenon in which the engine drops occurs often. In other words, changes in the workload may cause fluctuations in the vehicle speed. In this case, a driver needs to release a constant-speed driving mode.

The constant-speed driving mode may be released by applying a brake or manipulating the constant-speed driving switch.

When the driver releases the constant-speed driving mode, it is necessary to reset a new set vehicle speed (a fixed vehicle speed value required for constant-speed driving) suitable for the workload. Furthermore, once the set vehicle speed has been reset, the driver drives the agricultural work vehicle in the constant-speed driving mode by manipulating the constant-speed driving switch again.

However, such manipulation involves inconvenience each time and consequently delays work.

### Disclosure

### Technical Problem

The present invention was conceived from exploration into a technology capable of performing work while maintaining a constant-speed driving mode regardless of the driving load or work load.

### Technical Solution

According to a first aspect of the present invention, there is provided an agricultural work vehicle, including: a hydrostatic transmission configured to vary a speed depending on the rotational angle of a swash plate; a controller configured to control the rotational angle of the swash plate by generating a control current intended to adjust the rotational angle of the swash plate and providing it to the hydrostatic transmission, and provided with a constant-speed driving control function of enabling driving while maintaining a set vehicle speed set for constant-speed driving in a constant-speed driving mode; sensors configured to provide the controller with the information required to control the rotational angle of the control plate; a constant-speed driving switch configured to input a command to activate the constant-speed driving control function to the controller; and a speed setting switch configured to input a command to variably adjust the set vehicle speed required for constant-speed driving while maintaining the constant-speed driving mode during a process in which the controller controls the hydraulic transmission in the constant-speed driving mode through the activation of the constant-speed driving control function; wherein when a command to vary the set vehicle speed required for constant-speed driving is input via the speed setting switch, the controller controls the hydraulic transmission to vary the set vehicle speed while maintaining the constant-speed driving mode.

The controller performs may release the constant-speed driving mode when it is determined that a current load state is a heavy load state based on determination according to set criteria.

The controller may include: a collection means configured to collect the information required to adjust the rotational angle of the swash plate from the sensors; a determination means configured to determine the current load state based on the information collected by the collection means in the constant speed driving mode; and a control means configured to control the rotational angle of the swash plate according to the current load state determined by the determination means.

The current load state may be classified as one of a light load state, a heavy load state, and an intermediate load states between the light load and heavy load states, and the control means may control the rotation angle of the swash plate in a direction in which the current vehicle speed increases to the set vehicle speed in the light load state and the intermediate load state.

In the heavy load state, the control means may perform control to reduce the rotation angle of the swash plate by rotating the swash plate toward a minimum angle so that the agricultural work vehicle can enter the intermediate load state.

The agricultural work vehicle may further include: a power take-off unit configured to extract a portion of power output from the hydrostatic transmission and transmit it to an implement; and a manipulator configured to be manipulated to be movable to input a command to rotate the swash plate to the controller.

The agricultural work vehicle may further include a fixation unit configured to fix the position of the manipulator, and, when a command to activate the constant-speed driving control function is input via the constant-speed driving switch, the controller controls the hydrostatic transmission so that a current vehicle speed, which varies according to the load, changes to a set vehicle speed.

According to the present invention, there is provided a method of controlling an agricultural work vehicle, the method including: an information collection step of collecting the information used to determine a load state when a constant-speed driving mode is activated; a load determination step of identifying a current load state by analyzing the information collected in the information collection step and determining the current load state; and an angle control step of controlling the rotational angle of a swash plate in a hydrostatic transmission according to the current load state determined in the load determination step.

The load determination step may include determining whether the current load state is a light load state, a heavy load state, or an intermediate load state between the light load and heavy load states; and the angle control step may include controlling the rotational angle of the swash plate in a direction in which a current vehicle speed increases to a set vehicle speed in the light load and intermediate load states and performing control in the heavy load state to reduce the rotation angle of the swash plate by rotating the swash plate toward a minimum angle so that an agricultural work vehicle enters the intermediate load state.

The method may further include a mode release step of releasing the constant-speed driving mode when reducing the rotation angle of the swash plate so that the agricultural work vehicle can enter the intermediate load state from the heavy load state in the angle control step.

The load determination step may include: a first computation step of computing a set vehicle speed based on the light load state in a constant-speed driving mode; a first identification step of identifying whether a first set condition that is required for a torque of the engine and a speed of the engine to correspond to the heavy load state is satisfied; a second computation step of computing a vehicle speed difference between a set vehicle speed and a current vehicle speed when the first set condition is not satisfied in the first identification step; a second identification step of identifying whether a second set condition that is required for the torque of the engine and the vehicle speed difference computed in the second computation step to correspond to the light load state is satisfied; and a determination step of determining whether a current load state is the light load state, the heavy load state, or the intermediate load state based on the identifications made in the first identification step and the second identification step.

The first set condition may be a condition in which the torque of the engine is equal to or higher than a second specific value while the speed of the engine decreases, and the second set condition may be a condition in which the vehicle speed difference is smaller than or equal to a set value or the torque of the engine is lower than or equal to a first specific value that is smaller than the second specific value.

### Advantageous Effects

According to the present invention, there are provided the following effects:

First, there is provided the convenience of allowing a driver to vary a set vehicle speed while maintaining constant-speed driving through simple switch manipulation.

Second, the hydrostatic transmission is controlled in different control modes in response to a current load state in a constant-speed driving mode, so that the occurrence of situations in which an engine drops, work stops, or the like can be minimized.

Third, the controller performs control corresponding to a current load state based on its own determination, so that there is provided the convenience of minimizing variations in the set vehicle speed based on a driver's intention.

Therefore, ultimately, the inconvenience of the driver is reduced, so that the convenience of use and utilization rate of an agricultural work vehicle are improved.

### Description of Drawings

FIG. 1 is a diagram showing the configuration of an agricultural work vehicle according to an embodiment of the present invention;
FIG. 2 shows an embodiment of a hydrostatic transmission applied to the agricultural work vehicle of FIG. 1;
FIG. 3 shows an embodiment of a controller applied to the agricultural work vehicle of FIG. 1;
FIG. 4 is a flowchart illustrating a method of controlling an agricultural work vehicle according to an embodiment of the present invention;
FIG. 5 is an excerpt view for step S20 from the flowchart of FIG. 4; and
FIG. 6 is a reference diagram illustrating step S25 in the flowchart of FIG. 5.

### Mode for Invention

Preferred embodiments according to the present invention will be described with reference to the accompanying drawings. However, for brevity of description, descriptions of well-known configurations will be omitted or abridged as much as possible.

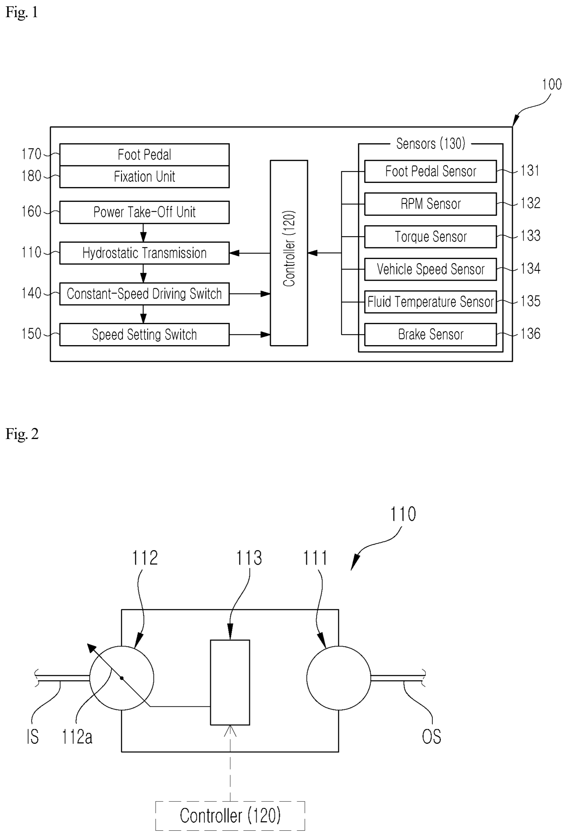

FIG. 1 is a diagram showing the configuration of an agricultural work vehicle according to an embodiment of the present invention. In particular, FIG. 1 is a diagram showing the configuration of a system part for constant-speed driving.

According to FIG. 1, an agricultural work vehicle 100 according to an embodiment of the present invention includes a hydrostatic transmission 110, a controller 120, sensors 130, a constant-speed driving switch 140, a speed setting switch 150, a power take-off unit 160, a foot pedal 170, and a fixation unit 180.

The hydrostatic transmission 110 performs continuously variable gear shifting based on the rotational angle of a swash plate 112a. It is preferable that the hydrostatic transmission 110 be provided to be electronically controlled.

Referring to FIG. 2, the hydrostatic transmission 110 includes a hydraulic motor 111, a hydraulic pump 112, and a servo-mechanism 113.

The hydraulic motor 111 generates the rotational force of an output shaft OS while being rotated by the hydraulic pressure supplied from the hydraulic pump 112.

The hydraulic pump 112 is operated by the rotational force of an input shaft IS connected to an engine (or a motor in an electric vehicle), and supplies working fluid, which generates hydraulic pressure, to the hydraulic motor 111.

The hydraulic pump 112 has the swash plate 112a whose angle is adjustable. The swash plate 112a is rotatably installed. The flow rate provided to the hydraulic motor 111 is varied depending on the rotational angle of the swash plate 112a. Furthermore, the hydraulic pressure provided to the hydraulic motor 111 is also varied due to the variation in flow rate. Accordingly, the rotational speed of the hydraulic motor 111 is varied, and the vehicle speed of the agricultural work vehicle is also varied.

The servo-mechanism 113 rotates the swash plate 112a located in the hydraulic pump 112. This servo-mechanism 113 rotates the swash plate 112a by being controlled by the controller 120.

The controller 120 may collect the information used to determine the rotational angle of the swash plate 112a. To this end, the controller 120 collects information from the various sensors 130 on the agricultural work vehicle 100. Based on the information collected from the sensors 130, the controller 120 controls the rotational angle of the swash plate 112a by generating a control current intended to adjust the rotational angle of the swash plate 112a and providing it to the hydrostatic transmission 110.

The controller 120 according to the present invention has a constant-speed control function of enabling driving while maintaining a set vehicle speed set for constant-speed driving in a constant-speed driving mode.

Furthermore, the controller 120 according to the present invention has a function of varying the set vehicle speed while maintaining the constant-speed driving mode.

In a preferred embodiment of the present invention, the set vehicle speed may be varied by the controller 120 in the constant-speed driving mode, and the vehicle speed may be adjusted to maintain the set vehicle speed.

To vary the set vehicle speed while maintaining the constant-speed driving mode, the speed setting switch 150 is utilized. A variation command is input from a driver to the controller 120 via the speed setting switch 150, and the controller 120 varies the set vehicle speed by controlling the hydrostatic transmission 110 according to the variation command.

The vehicle speed is automatically adjusted by the controller 120. The controller 120 makes its own determination based on the information collected from the sensors 130, and adjusts the current vehicle speed to the set vehicle speed by controlling the hydrostatic transmission 110. The automatic adjustment of the vehicle speed reduces the use of the speed setting switch 150, thus significantly reducing the inconvenience of the manipulation for adjusting the set vehicle speed.

The detailed configuration of the controller 120 and the control of the set vehicle speed will be described in more detail later.

The sensors 130 are provided to collect the information required to maintain the vehicle speed and varying the set vehicle speed, particularly in the constant-speed driving mode. That is, the information detected by the sensors 130 is provided to the controller 120.

For example, the sensors 130 may include a foot pedal sensor 131. The foot pedal sensor 131 detects the amount the foot pedal 170 is pressed and transmits this to the controller 120. In this case, the foot pedal 170 is a manipulator manipulated in such a manner that a driver steps on it with his or her foot, and is a shift pedal used to vary speed.

For example, the sensors 130 may include an RPM sensor 132. The RPM sensor 132 detects the RPM of the engine and transmits this to the controller 120.

For example, the sensors 130 may include a torque sensor 133. The torque sensor 133 detects the torque of the output shaft of the engine and transmits this to the controller 120.

For example, the sensors 130 may include a vehicle speed sensor 134. The vehicle speed sensor 134 detects the current vehicle speed of the agricultural work vehicle 100, and transmits this to the controller 120.

For example, the sensors 130 may include a fluid temperature sensor 135. The fluid temperature sensor 135 detects the temperature of working fluid, and transmits this to the controller 120.

Generally, the viscosity and like of the working fluid may be varied depending on temperature, which may affect the response speed and the vehicle speed. That is, since the set vehicle speed may be affected by the temperature of the working fluid, the information collected from the fluid temperature sensor 135 is required to compute and maintain an accurate set vehicle speed.

For example, the sensors 130 may include a brake sensor 136. The brake sensor 136 detects whether a brake is applied, and transmits this to the controller 120. For reference, when the brake sensor 136 outputs information indicating that the brake is applied while the agricultural work vehicle is driving in the constant-speed driving mode, the controller 120 releases the constant-speed driving mode.

According to the present invention, the remaining sensors 131 to 135, excluding the brake sensor 136, are specifically intended to detect information for the determination of a load state in the constant-speed driving mode.

Meanwhile, the controller 120 will be discussed again.

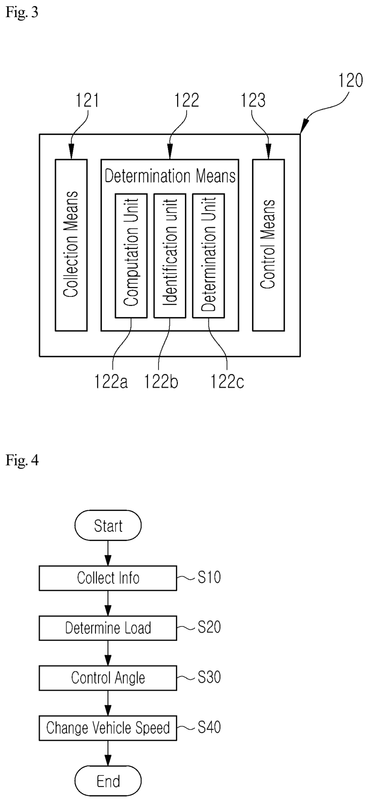

FIG. 3 is a diagram showing the configuration of a controller 120 according to an example.

The controller 120 may include a collection means 121, a determination means 122, and a control means 123.

The collection means 121 collects the information from the sensors 131 to 136.

The determination means 122 identifies the current load state using the information collected by the collection means 121. Furthermore, the determination means 122 determines whether the identified current load state corresponds to any one of a plurality of set load states.

The determination means 122 may include a computation unit 122a, an identification unit 122b, and a determination unit 122c.

The computation unit 122a computes the set vehicle speed using the information from the foot pedal sensor 131, the RPM sensor 132, and the fluid temperature sensor 135.

Furthermore, the computation unit 122a computes the vehicle speed difference between the set vehicle speed and the current vehicle speed using the information from the vehicle speed sensor 134.

Furthermore, the computation unit 122a computes the rotational angle of the swash plate 112a.

The identification unit 122b identifies whether a first set condition is satisfied.

The first set condition is a condition that is required for a current load state to correspond to a heavy load state.

Whether the first set condition is satisfied may be identified using the information from, for example, the torque sensor 133 and the RPM sensor 132.

More specifically, the first set condition may be a condition in which the RPM of the engine decreases currently and the torque of the engine is equal to or higher than a second specific value. In this case, the second specific value may be set to the value of the maximum torque that can be actually output by the engine.

Furthermore, the identification unit 122b identifies whether the second set condition is satisfied.

The second set condition is a condition that is required for the current load state to correspond to a light load state.

Whether the second set condition is satisfied may be identified using, for example, the information from the torque sensor 133 and the vehicle speed difference computed by the computation unit 122a.

More specifically, the second set condition may be the condition in which the vehicle speed difference is smaller than or equal to a set value or the torque of the engine is lower than or equal to a first specific value. In this case, the first specific value is set to a value smaller than the second specific value, and may be set based on, for example, a negligible load.

The determination unit 122c determines the current load state of the engine E based on whether the first or second set condition is satisfied.

According to an appropriate embodiment of the present invention, the current load state is set to one of three load states.

The three load states are light load, heavy load, and intermediate load states.

The light load state is a state having a relatively low load, and the heavy load state is a state having a relatively heavy load. Furthermore, the intermediate load state refers to a state between the light load and heavy load states.

That is, according to an embodiment, the determination unit 122c determines whether the current load state is a light load, heavy load, or intermediate load state based on whether the first or second set condition is satisfied.

The control means 123 controls the servo-mechanism 113 in a control mode varying depending on the current load state determined by the determination means 122. It is obvious that the rotational angle of the swash plate 112a is adjusted in response to the control of the servo-mechanism 113.

The control mode in light load and intermediate load states is a first control mode in which general control is performed.

In the first control mode, the control means 123 controls the rotational angle of the swash plate 112a using standard Proportional-Integral-Derivative (PID) control.

The control mode in a heavy load state is a second control mode in which special control is performed while maintaining the constant-speed driving mode.

In the second control mode, the control means 123 controls the hydrostatic transmission 110 to reduce the rotational angle of the swash plate 112a by rotating it toward the minimum angle, thereby enabling the agricultural work vehicle to enter an intermediate load state from a heavy load state. Then, the constant-speed driving mode is released.

For example, when the agricultural work vehicle drives at a constant speed of 1 km/h and enters a heavy load state, the control means 123 rotates the swash plate 112a toward the minimum angle to achieve an intermediate load state by taking into consideration a determined load. The control means 123 then prevents an engine from dropping by releasing the constant-speed driving mode.

The constant-speed driving switch 140 is provided for the driver to input a command to activate a constant-speed driving control function. Accordingly, when the driver commands the controller 120 to perform control in the constant-speed driving mode by manipulating the constant-speed driving switch 140, the controller 120 controls the agricultural work vehicle to operate in the constant-speed driving mode according to the command.

The speed setting switch 150 is provided for the driver to input a command to vary the set vehicle speed in the constant-speed driving mode. That is, the driver may input a command to increase or decrease the set vehicle speed, required for constant-speed driving, to the controller 120 by manipulating the speed setting switch 150. The controller 120 then varies the set vehicle speed according to the command. Furthermore, in this case, the controller 120 only varies the set vehicle speed, but does not release the constant-speed driving mode. That is, the controller 120 maintains the constant-speed driving mode even while the set vehicle speed is varied.

The power take-off unit 160 extracts the rotational power, used in an implement, from the output side of the hydrostatic transmission 110.

As described above, the foot pedal 170 is provided to vary the vehicle speed during normal driving. The degree of rotation of the swash plate 112a is determined in proportion to the amount the foot pedal 170 is pressed by the driver, and the vehicle speed is varied accordingly. The foot pedal 170 is a manipulator implemented in a form that allows the driver to move its position by stepping on it with his or her foot. That is, the agricultural work vehicle 100 according to this example presents the foot pedal 170 on which the driver steps with the foot as a manipulator for controlling acceleration or deceleration. However, depending on the implementation, the manipulator may also be implemented in the form of a hand-manipulated gearshift lever or the like. The foot pedal 170 may be fixed in position according to the driver's selection.

The fixation unit 180 is used to fix the position of the foot pedal 170. For example, after the driver has changed the position of the foot pedal 170 by the specific amount the foot pedal 170 is pressed, the fixation unit 180 fixes the position of the foot pedal 170. Then, the engine and the hydrostatic transmission 110 are controlled according to the fixed amount the foot pedal 170 is pressed, and thus, the agricultural work vehicle 100 is driven.

Next, a control method performed to adjust a vehicle speed in a constant-speed driving mode in the agricultural work vehicle 100 having the above-described configuration will be described with reference to the flowchart of FIG. 4.

### 1. Information Collection <S10>

A constant-speed driving control function is activated in such a manner that the constant-speed driving switch 140 is manipulated by a driver, so that switching to a constant-speed driving mode is achieved. Then, the collection means 121 of the controller 120 collects the information used to determine a load state in the constant-speed driving mode. In this case, the collected information includes the amount the foot pedal is pressed, the RPM of the engine, the torque of the engine, the current vehicle speed, and the temperature of working fluid received from the foot pedal sensor 131, the RPM sensor 132, the torque sensor 133, the vehicle speed sensor 134, and the fluid temperature sensor 135. It is obvious that any information that allows for the more accurate determination of the load state may be added.

For reference, an implementation may be made such that the driver fixes the foot pedal 170 to a predetermined position using the fixation unit 180 before switching to the constant-speed driving mode.

### 2. Load Determination <S20>

The determination means 122 identifies a current load state by analyzing the information collected in step S10, and then determines the current load state.

The current load state may be classified as, for example, one of light load, heavy load, and intermediate load states.

The light load state is a state in which the load is slight, so that it is sufficient if control is performed by PID control, which is conventional control.

The heavy load state is a state in which the load is high, so that special control is required.

The intermediate load state is a state in the interval between the light load and heavy load states.

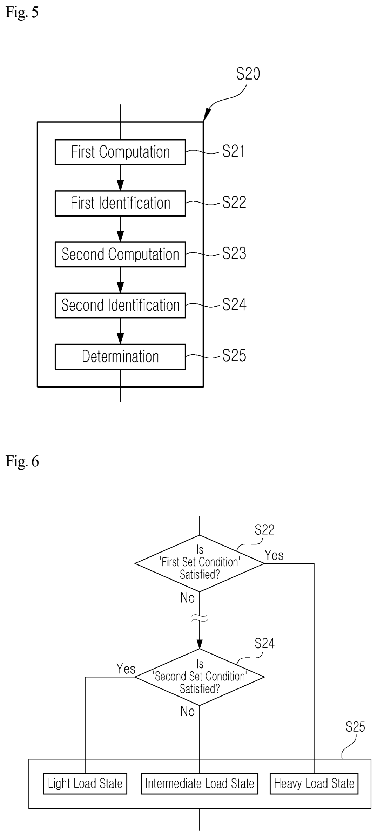

Step S20 may be further subdivided into more specific steps, as shown in the flowchart of FIG. 5.

### 2-1. First Computation <S21>

The computation unit 122a computes a set vehicle speed in the constant-speed driving mode using the information collected from the foot pedal sensor 131, the RPM sensor 132, and the fluid temperature sensor 135 out of the information collected in step S10. In this case, the information from the foot pedal sensor 131 is the amount the foot pedal 170 is pressed by the driver, the information from the RPM sensor 132 is the RPM of the engine, and the information from the fluid temperature sensor 135 is the temperature of working fluid.

The set vehicle speed is computed based on the light load state. Accordingly, when the load is increased, the controller 120 may need to control the rotational angle of the swash plate 112a or perform further special control in order to maintain the set vehicle speed. In this case, the light load state is a state that satisfies a second set condition, which will be described later. Therefore, the set vehicle speed is computed based on the criteria that satisfy the second set condition.

### 2-2. First Identification <S22>

The identification unit 122b identifies whether the first set condition regarding the torque of the engine and the RPM of the engine is satisfied.

The first set condition is a condition regarding the torque of the engine and the RPM of the engine for corresponding to a heavy load state.

According to a preferred embodiment, the first set condition may be a condition in which the RPM of the engine decreases and the torque of the engine is equal to or higher than the second specific value.

### 2-3. Second Computation <S23>

When the first set condition is not satisfied in step S22, the computation unit 122b computes the vehicle speed difference between the set vehicle speed and the current vehicle speed.

For example, when the RPM of the engine increases or the torque of the engine is lower than the second specific value, the computation unit 122a computes the vehicle speed difference using the set vehicle speed computed in step S21 and the current vehicle speed collected from the vehicle speed sensor 340.

### 2-4. Second Identification <S24>

The identification unit 122b identifies whether the second set condition regarding the torque of the engine and the vehicle speed difference computed in step S23 is satisfied.

The second set condition is a condition regarding the torque of the engine and vehicle speed difference for corresponding to a light load state.

According to a preferred embodiment, the second set condition may be a condition in which the vehicle speed difference is equal to or smaller than a set value or the torque of the engine is equal to or lower than the first specific value.

The set value is preferably an optimal value selected through numerous repeated tests.

For reference, in the case where the set value is 0.1 km/h, the second set condition may be satisfied when the vehicle speed difference is smaller than 0.1 km/h. Furthermore, even in the case where the vehicle speed difference is larger than 0.1 km/h, the second set condition may be satisfied when the torque of the engine is lower than or equal to the first specific value.

For reference, the vehicle speed difference in the present embodiment is an absolute value that can only define the magnitude thereof. That is, for the first set condition to be satisfied when the set value is 0.1 km/h, the vehicle speed difference needs to fall within the range of (-)0.1 km/h to (+)0.1 km/h.

### 2-5. Determination <S25>

The determination unit 122c determines whether a current state is a light load state, a heavy load state, or an intermediate load state based on the identifications made in steps S22 and S24.

Step S25 will be discussed in more detail with reference to the reference diagram in FIG. 6.

According to the present example, when it is identified in step S22 that the first set condition is currently satisfied, the determination unit 223 determines that the current state is a heavy load state.

According to the present example, when it is identified in step S22 that the first set condition is not satisfied and it is identified in step S24 that the second set condition is satisfied, the determination unit 122c determines that the current state is a light load state.

According to the present example, when it is identified in step S22 that the first set condition is not satisfied and it is identified in step S24 that the second set condition is not satisfied, the determination unit 122c determines that the current state is an intermediate load state between the light load state and the heavy load state.

### 3. Angle Control <S30>

In step S20, when the current load state is determined, the control means 123 adjusts the rotational angle of the swash plate 112a in the hydrostatic transmission 110 using either the first control mode or a second control mode different from the first control mode according to the determined load state.

In light load and intermediate load states, the rotational angle of the swash plate 112a is controlled in the first control mode. In the first control mode, the controller 120 controls the rotational angle of the swash plate 112a through PID control. That is, according to the present invention, even when the position of the foot pedal 170 is fixed, the hydrostatic transmission 110 is controlled to vary the current vehicle speed to the set vehicle speed in response to a change in the current vehicle speed according to the amount of load.

For example, in light load and intermediate load states, the rotational angle of the swash plate 112a is controlled to increase the current vehicle speed, which has been lowered below the set vehicle speed due to the load, to the set vehicle speed. Accordingly, the amount of use of the speed setting switch 150 configured to change the set vehicle speed may be reduced.

However, in a heavy load state, the controller 120 performs control to reduce the rotational angle of the swash plate 112a by rotating the swash plate 112a toward the minimum angle so that the agricultural work vehicle can enter an intermediate load state. In this case, the amount of rotation of the swash plate 112a preferably has a value that allows the agricultural work vehicle to enter an intermediate load state by taking into consideration the current load.

### 4. Mode Release <S40>

When the rotational angle of the swash plate 112a is reduced by step S30 and thus the agricultural work vehicle enters an intermediate load state from a heavy load state, the controller 120 releases the constant-speed driving mode.

That is, according to the present embodiment, although the driver may make a change to reduce the set vehicle speed using the speed setting switch 150, the benefit of preventing an instantaneous engine drop phenomenon is greater. Accordingly, an implementation is made such that the controller 120 prevents an engine from dropping by releasing the constant-speed driving mode based on its own determination.

### <Reference>

According to the above-described embodiment, the set vehicle speed is varied using the speed setting switch 150 while maintaining the constant-speed driving mode without change. However, depending on the implementation, it may also be contemplated that an implementation may be made such that the controller 120 varies the set vehicle speed based on its own determination. For example, an implementation may be made such that the controller 120 varies the set vehicle speed under a specific condition based on its own determination before releasing the constant-speed driving mode. Naturally, it is necessary that an implementation is made such that even in this case, when it is determined that returning to a normal constant-speed driving mode is impossible, the controller 120 prevents the engine from dropping by releasing the constant-speed driving mode.

The above-described embodiments merely illustrate preferred examples of the present invention, and may have various application forms. Therefore, the present invention should not be construed as being limited to the above-described content. Instead, the scope of the present invention should be construed based on the separately described claims and their equivalents.

## Claims

1. An agricultural work vehicle, comprising:
a hydrostatic transmission (110) configured to vary a speed depending on a rotational angle of a swash plate (112a);
a controller (120) configured to control the rotational angle of the swash plate (112a) by generating a control current intended to adjust the rotational angle of the swash plate (112a) and providing the control current to the hydrostatic transmission (110), and provided with a constant-speed driving control function of enabling driving while maintaining a set vehicle speed set for constant-speed driving in a constant-speed driving mode;
sensors (130) configured to provide the controller (120) with information required to control the rotational angle of the control plate (112a);
a constant-speed driving switch (140) configured to input a command to activate the constant-speed driving control function to the controller (120); and
a speed setting switch (150) configured to input a command to variably adjust the set vehicle speed required for constant-speed driving while maintaining the constant-speed driving mode during a process in which the controller (120) controls the hydraulic transmission (110) in the constant-speed driving mode through activation of the constant-speed driving control function;
wherein when a command to vary the set vehicle speed required for constant-speed driving is input via the speed setting switch (150), the controller (120) controls the hydraulic transmission (110) to vary the set vehicle speed while maintaining the constant-speed driving mode.

2. The agricultural work vehicle of claim 1, wherein the controller (120) performs control to release the constant-speed driving mode when it is determined that a current load state is a heavy load state based on determination according to set criteria.

3. The agricultural work vehicle of claim 1, wherein the controller (120) comprises:
a collection means (121) configured to collect information required to adjust the rotational angle of the swash plate (112a) from the sensors (130);
a determination means (122) configured to determine a current load state based on the information collected by the collection means (121) in the constant speed driving mode; and
a control means (123) configured to control the rotational angle of the swash plate (112a) according to the current load state determined by the determination means (122).

4. The agricultural work vehicle of claim 3, wherein:
the current load state is classified as one of a light load state, a heavy load state, and an intermediate load states between the light load and heavy load states;
the control means (123) controls the rotation angle of the swash plate (112a) in a direction in which a current vehicle speed increases to the set vehicle speed in the light load state and the intermediate load state; and
in the heavy load state, the control means (123) performs control to reduce the rotation angle of the swash plate (112a) by rotating the swash plate (112a) toward a minimum angle so that the agricultural work vehicle can enter the intermediate load state.

5. The agricultural work vehicle of claim 1, further comprising:
a power take-off unit (160) configured to extract a portion of power output from the hydrostatic transmission (110) and transmit the portion of the power to an implement; and
a manipulator configured to be manipulated to be movable to input a command to rotate the swash plate (112a) to the controller (120).

6. The agricultural work vehicle of claim 5, further comprising a fixation unit (180) configured to fix a position of the manipulator,
wherein when a command to activate the constant-speed driving control function is input via the constant-speed driving switch (140), the controller (120) controls the hydrostatic transmission (110) so that a current vehicle speed, which varies according to the load, changes to a set vehicle speed.

7. A method of controlling an agricultural work vehicle, the method comprising:
an information collection step <S10> of collecting information used to determine a load state when a constant-speed driving mode is activated;
a load determination step <S20> of identifying a current load state by analyzing the information collected in the information collection step <S 10> and determining the current load state; and
an angle control step <S30> of controlling a rotational angle of a swash plate (112a) in a hydrostatic transmission (110) according to the current load state determined in the load determination step <S20>.

8. The method of claim 7, wherein:
the load determination step <S20> comprises determining whether the current load state is a light load state, a heavy load state, or an intermediate load state between the light load and heavy load states; and
the angle control step <S30> comprises controlling the rotational angle of the swash plate (112a) in a direction in which a current vehicle speed increases to a set vehicle speed in the light load and intermediate load states and performing control in the heavy load state to reduce the rotation angle of the swash plate (112a) by rotating the swash plate (112a) toward a minimum angle so that an agricultural work vehicle enters the intermediate load state.

9. The method of claim 8, further comprising a mode release step <S40> of releasing the constant-speed driving mode when reducing the rotation angle of the swash plate (112a) so that the agricultural work vehicle can enter the intermediate load state from the heavy load state in the angle control step <S30>.

10. The method of claim 8, wherein the load determination step <S20> comprises:
a first computation step <S21> of computing a set vehicle speed based on the light load state in the constant-speed driving mode;
a first identification step <S22> of identifying whether a first set condition that is required for a torque of an engine and a speed of the engine to correspond to the heavy load state is satisfied;
a second computation step <S23> of computing a vehicle speed difference between the set vehicle speed and a current vehicle speed when the first set condition is not satisfied in the first identification step <S22>;
a second identification step <S24> of identifying whether a second set condition that is required for the torque of the engine and the vehicle speed difference computed in the second computation step <S23> to correspond to the light load state is satisfied; and
a determination step <S25> of determining whether a current load state is the light load state, the heavy load state, or the intermediate load state based on the identifications made in the first identification step <S22> and the second identification step <S24>.

11. The method of claim 10, wherein:
the first set condition is a condition in which the torque of the engine is equal to or higher than a second specific value while the speed of the engine decreases; and
the second set condition is a condition in which the vehicle speed difference is smaller than or equal to a set value or the torque of the engine is lower than or equal to a first specific value that is smaller than the second specific value.
